# EUROPÄISCHE PATENTANMELDUNG

(11) **EP 2 879 347 A1**
(43) Veröffentlichungstag der Anmeldung: **03.06.2015**
(21) Anmeldenummer: 14195354.7
(22) Anmeldetag: 28.11.2014
(51) Int. Cl.: H04L 29/06, H04W 12/06, H04L 29/08, H04W 88/02, H04W 88/14

(54) **Steuerung der Nutzung von einem Endgerät in einem Mobilfunknetz für Kommunikationsverbindungen zur Verfügung stehenden Diensten**

(30) Priorität: 29.11.2013 DE 102013113270
(71) Anmelder: Vodafone Holding GmbH, 40549 Düsseldorf (DE)
(72) Erfinder: Astrovski, Sergej, 47443 Moers (DE); Dorsel, Uwe, 41751 Viersen (DE); Breuer, Gorden, 47475 Kamp-Lintfort (DE); Goeksueguer, Selma, 40468 Düsseldorf (DE)
(74) Vertreter: Ring & Weisbrodt

(57) **Zusammenfassung**

Die vorliegende Erfindung betrifft Verfahren zur Steuerung der Nutzung von einem Endgerät (2) in einem Mobilfunknetz für Kommunikationsverbindungen zur Verfügung stehenden Diensten, wobei das Endgerät (2) für einen Zugang zu dem Mobilfunknetz ein Teilnehmeridentifikationsmodul nutzt.

Gegenstand der vorliegenden Erfindung ist ferner eine Vermittlungseinrichtung (1) eines Mobilfunknetzes zur Steuerung der Nutzung von einem Endgerät (2) in dem Mobilfunknetz für Kommunikationsverbindungen zur Verfügung stehenden Diensten, wobei das Endgerät (2) für einen Zugang zu dem Mobilfunknetz ein Teilnehmeridentifikationsmodul nutzt. Die Vermittlungseinrichtung (1) ist dabei insbesondere ausgebildet und/oder eingerichtet die seitens der Vermittlungseinrichtung (1) auszuführenden Verfahrensschritte eines erfindungsgemäßen Verfahrens auszuführen.

Darüber hinaus betrifft die vorliegende Erfindung ein Endgerät (2) zur Nutzung von in einem Mobilfunknetz für Kommunikationsverbindungen zur Verfügung stehenden Diensten, wobei das Endgerät (2) für einen Zugang zu dem Mobilfunknetz ein Teilnehmeridentifikationsmodul nutzt. Das Endgerät (2) ist dabei insbesondere ausgebildet und/oder eingerichtet die seitens des Endgerätes (2) auszuführenden Verfahrensschritte eines erfindungsgemäßen Verfahrens auszuführen.

## Beschreibung

Die vorliegende Erfindung betrifft Verfahren zur Steuerung der Nutzung von einem Endgerät in einem Mobilfunknetz für Kommunikationsverbindungen zur Verfügung stehenden Diensten, wobei das Endgerät für einen Zugang zu dem Mobilfunknetz ein Teilnehmeridentifikationsmodul nutzt.

Gegenstand der vorliegenden Erfindung ist ferner eine Vermittlungseinrichtung eines Mobilfunknetzes zur Steuerung der Nutzung von einem Endgerät in dem Mobilfunknetz für Kommunikationsverbindungen zur Verfügung stehenden Diensten, wobei das Endgerät für einen Zugang zu dem Mobilfunknetz ein Teilnehmeridentifikationsmodul nutzt. Die Vermittlungseinrichtung ist dabei insbesondere ausgebildet und/oder eingerichtet die seitens der Vermittlungseinrichtung auszuführenden Verfahrensschritte eines erfindungsgemäßen Verfahrens auszuführen.

Darüber hinaus betrifft die vorliegende Erfindung ein Endgerät zur Nutzung von in einem Mobilfunknetz für Kommunikationsverbindungen zur Verfügung stehenden Diensten, wobei das Endgerät für einen Zugang zu dem Mobilfunknetz ein Teilnehmeridentifikationsmodul nutzt. Das Endgerät ist dabei insbesondere ausgebildet und/oder eingerichtet die seitens des Endgerätes auszuführenden Verfahrensschritte eines erfindungsgemäßen Verfahrens auszuführen.

In Mobilfunknetzen, insbesondere bei Mobilfunknetzen gemäß einem GSM-, GPRS- UMTS-, CDMA- und/oder LTE-Funknetzstandard, sowie in Funknetzen nach dem 802.11 Standard werden Teilnehmern beziehungsweise den von diesen genutzten mobilen Endgeräten für Kommunikationsverbindungen unterschiedliche Dienste zur Nutzung angeboten. Derartige Dienste für Kommunikationsverbindungen umfassen dabei insbesondere Dienste zur Sprachund/oder Datenübertragung zwischen Teilnehmern bzw. Endgeräten, beispielsweise für Anrufe, Mitteilungsdienste wie SMS (SMS: Short Message Service) oder MMS (MMS: Multimedia Message Service), Internet oder dergleichen Dienste. Eine Nutzungssteuerung von Mobilfunknetzdiensten kann dabei insbesondere ein zur Verfügungstellen oder ein Sperren bzw. Blockieren bestimmter Dienste als auch ein zur Verfügungstellen oder ein Sperren bzw. Blockieren bestimmter Dienstmerkmale eines Dienstes umfassen, insbesondere eine Weiterleitung von Gesprächen oder dergleichen, eine Blockierung abgehender und/oder ankommender Kommunikationsverbindungen und/oder Gespräche, unterschiedliche Dienstgüten hinsichtlich Sprachqualität, zur Verfügung stehender Datenübertragungsrate oder dergleichen Dienstgüten, und/oder die Anwendung unterschiedlicher Rufnummern für von einem mobilen Endgerät abgehende und/oder bei diesem ankommende Kommunikationsverbindungen, insbesondere die Nutzung einer Rufnummer eines drahtgebundenen Fernsprechnetzes (sogenannte Festnetznummer), oder einer Mobilfunknummer (MSISDN). Dienstnutzungen einer unterschiedlichen Vergebührung von Kommunikationsverbindungen sind insbesondere in der Anwendung unterschiedlicher Nutzungstarife, beispielsweise Minutenpreise, vom Umfang von übertragenen Daten und/oder der Datenübertragungsrate abhängige Preise, oder dergleichen, für von einem mobilen Endgerät abgehende und/oder bei diesem ankommende Kommunikationsverbindungen.

Im Stand der Technik sind verschiedene Verfahren und Vorrichtungen bzw. Systeme zur Steuerung der Nutzung von einem Endgerät in einem Mobilfunknetz für Kommunikationsverbindungen zur Verfügung stehenden Diensten, wobei das Endgerät für einen Zugang zu dem Mobilfunknetz ein Teilnehmeridentifikationsmodul nutzt, bekannt. Dabei kann das Teilnehmeridentifikationsmodul in Form einer sogenannten SIM-Karte beziehungsweise in Form eines fest in dem Endgerät angeordneten oder ausgebildeten Moduls, einem sogenannten User-Identity-Modul (UIM) ausgebildet sein.

In diesem Zusammenhang ist es beispielsweise aus der EP 0 757 502 B1 bekannt, ein von einem mobilen Endgerät für einen Zugang zu einem Mobilfunknetz genutztes Teilnehmeridentifikationsmodul für Nutzungen von Diensten des Mobilfunknetzes selektiv an das Mobilfunknetz zu binden. Dabei wird ein Zugang des mobilen Endgerätes zu dem Mobilfunknetz für eine Nutzung von Kommunikationsdiensten des Mobilfunknetzes bei Verwendung eines anderen oder abweichenden Teilnehmeridentifikationsmoduls mit dem mobilen Endgerät verhindert, insbesondere da das mobile Endgerät nicht für eine Nutzung von Mobilfunknetzdiensten mit dem anderen oder abweichenden Teilnehmeridentifikationsmodul zugelassen oder freigegeben ist. In dem Mobilfunknetz ist eine Datenbank vorhanden, welche ein Geräteidentitätsregister, ein sogenanntes Equipment Identity Register (EIR) umfasst. In dem EIR sind endgerätespezifische Informationen, insbesondere die sogenannte IMEI (IMEI: International Mobile Station Equipment Identity) enthalten, welche bei dem Herstellen einer Verbindung zwischen dem mobilen Endgerät mit dem Mobilfunknetz überprüft werden. Derart kann selektiv verhindert werden, dass bestimmte mobile Endgeräte, die anhand der endgerätespezifischen Informationen eindeutig identifizierbar sind, im Mobilfunknetz Dienste des Mobilfunknetzes nutzen können. Ein Anwendungsfall für die Lösung gemäß der EP 0 757 502 B1 ist insbesondere die Realisierung eines Diebstahlschutzes für mobile Endgeräte.

Ferner ist es in diesem Zusammenhang im Stand der Technik bekannt, in einem mobilen Endgerät selbst eine Überprüfung hinsichtlich eines zur Nutzung mit dem Endgerät zugelassenen Teilnehmeridentifikationsmoduls durchzuführen. In der Regel wird hierfür anhand einer in einem Speicherbereich des mobilen Endgerätes fest hinterlegten Liste, welche wenigstens eine Information hinsichtlich zulässiger Verpaarungen von endgerätespezifischen Informationen, insbesondere die IMEI des Endgerätes, und teilnehmerspezifischen Informationen, insbesondere die sogenannte IMSI (IMSI: International Mobile Subscriber Identity) des von dem Endgerät genutzten Teilnehmeridentifikationsmoduls, also insbesondere Verpaarungen von IMEI/IMSI-Kombinationen, erfasst, überprüft, ob die in dem mobilen Endgerät vorhandene IMSI, die von dem Teilnehmeridentifikationsmodul bereitgestellt wird, für Nutzungen von Diensten des Mobilfunknetzes mit dem mobilen Endgerät zugelassen bzw. freigegeben ist. Damit wird ein sogenannter SIM-Lock realisiert, der vor allem bei Endgeräten zur Anwendung kommt, welche zum Teil durch die Mobilfunknetzbetreiber subventioniert werden und demzufolge ausschließlich zum Betrieb mit dem jeweiligen Mobilfunknetz des Mobilfunknetzbetreibers zugelassen sein sollen.

Nachteilig bei dem vorbekannten Stand der Technik, insbesondere gemäß der EP 0 757 502 B1, ist zum einen, dass lediglich eine Überprüfung der endgerätespezifischen Informationen eines Endgerätes hinsichtlich einer Verhinderung der Nutzung von Mobilfunknetzdiensten im Falle eines gestohlenen mobilen Endgerätes im Mobilfunknetz durchgeführt wird. Zum anderen ist nachteilig, dass die in einem Speicherbereich des mobilen Endgerätes fest hinterlegte Liste, welche wenigstens eine Information hinsichtlich zulässiger Verpaarungen von endgerätespezifischen Informationen, insbesondere die IMEI des Endgerätes, und teilnehmerspezifischen Informationen, insbesondere die sogenannte IMSI des von dem Endgerät genutzten Teilnehmeridentifikationsmoduls, umfasst, jeweils lokal in den mobilen Endgeräten vorhanden sein muss. Eine derartige Liste muss dazu in jedes mobile Endgerät einzeln geladen werden. Eine Änderung dieser Liste ist seitens eines Mobilfunknetzbetreibers nur äußerst aufwändig vornehmbar, insbesondere da jede einzelne Liste eines mobilen Endgerätes unabhängig voneinander in dem mobilen Endgerät geändert werden muss, was entsprechend zeitaufwändig und in der Durchführung kompliziert ist.

Ausgehend von diesem Stand der Technik liegt der vorliegenden Erfindung die Aufgabe zugrunde, die Steuerung der Nutzung von einem Endgerät in einem Mobilfunknetz für Kommunikationsverbindungen zur Verfügung stehenden Diensten, wobei das Endgerät für einen Zugang zu dem Mobilfunknetz ein Teilnehmeridentifikationsmodul nutzt, zu verbessern. Dabei soll eine Nutzungssteuerung insbesondere unter Berücksichtigung von endgeräte- und teilnehmerspezifischen Informationen zwischen einer Vermittlungseinrichtung eines Mobilfunknetzes und einem mobilen Endgerät derart ermöglicht werden, dass eine sichere Authentifizierung von Verpaarungen von Teilnehmeridentifikationsmodulen und den das Teilnehmermodul nutzenden Endgeräten ermöglicht wird. Ferner soll eine leichte und flexible Verwaltung derartiger zulässiger Kombinationen bzw. Verpaarungen ermöglicht werden, die insbesondere unabhängig vom Endgerät und vom Endgerätehersteller selbst durchführbar ist.

Zur technischen Lösung wird mit der vorliegenden Erfindung ein Verfahren zur Steuerung der Nutzung von einem Endgerät in einem Mobilfunknetz für Kommunikationsverbindungen zur Verfügung stehenden Diensten, wobei das Endgerät für einen Zugang zu dem Mobilfunknetz ein Teilnehmeridentifikationsmodul nutzt, vorgeschlagen, wobei seitens einer Vermittlungseinrichtung des Mobilfunknetzes die folgenden Verfahrensschritte ausgeführt werden:
A) Empfangen von endgeräte- und teilnehmerspezifischen Informationen eines Endgerätes von dem Endgerät;
B) Vergleichen der empfangenen Informationen des Endgerätes mit seitens einer Datenbank erfassten Informationen, wobei die Informationen in der Datenbank Verpaarungen von endgeräte- und teilnehmerspezifischen Informationen umfassen; und
C) Sperren von Diensten des Mobilfunknetzes für das Endgerät und/oder das Teilnehmeridentifikationsmodul wenn im Rahmen des Vergleichens festgestellt wird, dass nicht wenigstens ein bestimmter Teil der empfangenen Informationen einem bestimmten Teil einer in der Datenbank erfassten Verpaarung entspricht.

Der Erfindung liegt die Erkenntnis zugrunde, dass die Überprüfung von endgeräte- und teilnehmerspezifischen Informationen wesentlich vereinfacht wird, wenn zulässige Kombinationen beziehungsweise Verpaarungen netzseitig, das heißt vorzugsweise in einer Datenbank des Mobilfunknetzes oder in einer über das Mobilfunknetz zugänglichen Datenbank, hinterlegt sind. Bei erforderlichen Änderungen von zulässigen Kombinationen bzw. Verpaarungen von endgerätespezifischen Informationen, insbesondere die IMEI eines Endgerätes, und teilnehmerspezifischen Informationen, insbesondere die sogenannte IMSI eines von einem Endgerät genutzten Teilnehmeridentifikationsmoduls, ist demzufolge nur ein einzelner Eintrag in der Datenbank erforderlich. Aufwändige Änderungen in jedem einzelnen Endgerät können entfallen. Vorteilhafterweise ist es hierfür erfindungsgemäß lediglich erforderlich, dass im Rahmen des Herstellens einer Verbindung zwischen der Vermittlungseinrichtung des Mobilfunknetzes und dem Endgerät die endgeräte- und teilnehmerspezifischen Informationen seitens des Endgerätes von dem Endgerät an die Vermittlungseinrichtung des Mobilfunknetzes gesendet werden. Die eigentliche Überprüfung der Kombinationen beziehungsweise Verpaarungen von endgerätespezifischen Informationen und teilnehmerspezifischen Informationen erfolgt seitens des Mobilfunknetzes durch die Vermittlungseinrichtung des Mobilfunknetzes.

Die Vermittlungseinrichtung kann bei Verwendung eines Mobilfunknetzes gemäß einem GSM-, GPRS- und/oder UMTS-Funknetzstandard ein sogenanntes MSC (MSC: Mobile-services Switching Centre) sein. Zudem kann die Vermittlungseinrichtung als sogenanntes MME (MME: Mobility Management Entity) ausgebildet sein, insbesondere bei Mobilfunknetzen gemäß einem LTE-Funknetzstandard.

In einer vorteilhaften Ausgestaltung der Erfindung werden im Rahmen des Vergleichens die teilnehmerspezifischen Informationen anhand einer definierten Prüftiefe analysiert, wobei die Prüftiefe vorzugsweise den bestimmten Teil definiert. Die teilnehmerspezifischen Informationen werden vorteilhafterweise von dem Teilnehmeridentifikationsmodul bereitgestellt, welches als SIM oder als UIM ausgebildet sein kann. Bei UIM handelt es sich um fest in einem Speicherbereich eines Endgerätes vorgesehenes Modul, welches teilnehmerspezifische Informationen aufweist, welche frei dem Modul zugeordnet werden können. In der Regel entsprechen die teilnehmerspezifischen Informationen der IMSI. Dem Mobilfunknetzbetreiber dient die IMSI zur Identifikation des einen Zugang zum Mobilfunknetz für Dienstnutzungen suchenden Teilnehmers.

Die definierte Prüftiefe gibt vorteilhafterweise vor, wie die teilnehmerspezifischen Informationen analysiert werden. Anhand der Prüftiefe kann festgelegt werden, dass beispielsweise nur Teilnehmeridentifikationsmodule bestimmter Länder, Mobilfunknetzbetreiber, Mobilfunknetze oder dergleichen zugelassen sind. Beispielsweise beschreiben die ersten drei Stellen der IMSI den Ländercode, also aus welchem Ursprungsland das Teilnehmeridentifikationsmodul stammt. Die nächsten beiden Ziffern geben Auskunft über den Mobilfunknetzbetreiber. Wird die Prüftiefe nun auf die ersten fünf Stellen der IMSI definiert, wird ein sogenannter Netlock durchgeführt. Demzufolge kann eine Nutzung von Diensten eines Mobilfunknetzes nur mit Teilnehmeridentifikationsmodulen eines bestimmten Landes und eines bestimmten Mobilfunknetzbetreibers erfolgen. Die auf die Ziffer zur Identifizierung des Mobilfunknetzbetreibers folgenden Stellen der IMSI beschreiben das sogenannte Heimatregister HLR (HLR: Home Location Register), des Teilnehmeridentifikationsmoduls. Die nächsten Ziffern der IMSI beschreiben den sogenannten NDC (NDC: National Destination Code). Wird die Prüftiefe dahingehend erweitert, dass zusätzlich die Stellen der IMSI des HLR und des NDC analysiert werden, erfolgt ein sogenannter HLR-Lock. Die letzten Ziffern einer IMSI beschreiben eine Zählnummer. Insgesamt erlaubt die IMSI eine eindeutige Identifikation eines Teilnehmeridentifikationsmoduls und kann maximal 15 Ziffern aufweisen. Wird die gesamte Länge der IMSI als Prüftiefe definiert, wird vorteilhafterweise ein SIM-Lock durchgeführt, der eine genaue Überprüfung hinsichtlich eines Teilnehmeridentifikationsmoduls ermöglicht. Die gesamte Überprüfung der IMSI kann vorteilhafterweise für eine Analyse und Feststellung eines Diebstahles eines Endgerätes Anwendung finden. Die Erfindung ermöglicht es vorteilhafterweise die Prüftiefe anhand eines Musters (Pattern), eines Ranges, eines Bereichen und/oder dergleichen durchzuführen. Dieses Muster, dieser Rand und/oder dieser Bereich sind vorteilhafterweise als Kriterien vordefinierbar.

Vorteilhafterweise ergibt sich die Prüftiefe aus der Anzahl der Stellen sowohl der teilnehmerspezifischen Informationen des Teilnehmeridentifikationsmoduls, vorzugsweise der IMSI der SIM, als auch der endgerätespezifischen Informationen des Endgerätes, vorzugsweise der IMEI des Endgerätes, die geprüft werden sollen.

Im Falle der teilnehmerspezifischen Informationen des Teilnehmeridentifikationsmoduls, vorzugsweise der IMSI der SIM, werden vorteilhafterweise nur die ersten fünf Stellen geprüft, beispielsweise um alle SIM eines bestimmten Mobilfunknetzbetreibers freizugeben oder zu sperren, je nach Bedarf oder Definition. Wird die Prüftiefe vergrößert und die Prüfung auf weitere Stellen erweitert, vorzugsweise auf sieben Stellen, werden alle SIM des Mobilfunknetzbetreibers die zu einem bestimmten HLR-Bereich gehören freigegeben oder gesperrt.

Vorteilhafterweise wird ein Roaming ermöglicht, in dem die ersten fünf Stellen des Teilnehmeridentifikationsmoduls, vorzugsweise der IMSI der SIM, von allen ausländischen Netzbetreibern mit denen der das Teilnehmeridentifikationsmodul herausgebende Mobilfunknetzbetreiber ein Roamingabkommen abgeschlossen hat, als freigegebene Kombination mit allen endgerätespezifischen Daten, vorzugsweise den IMEI's der Endgeräte, definiert wird. Die IMEI's der Endgeräte müssen dann vorteilhafterweise nicht mehr geprüft werden bzw. die Prüftiefe umfasst keine, also null Stellen der IMEI.

Die nachfolgende Tabelle zeigt ein Beispiel für die Stellen der IMSI, die für die Prüftiefe zur Verfügung stehen:

| | **Land** | **Netz** | **HLR** | **NDC** | **Sequenz** |
|---|---|---|---|---|---|
| IMSI | 262 | 02 | 96 | 1 | 123456 |

| | | | |
|---|---|---|---|
| 01: | T-Mobile | 0: | 172 |
| 02: | Vodafone | 1: | 173 |
| 03: | e-Plus | 2: | 174 |
| 07: | O2 | 3: | 162 |
| 16: | vistream | 4: | 1520 |
| 60: | DB Telematik | 5: | 1522 |
| | | 6: | 1525 |
| | | 7: | |
| | | 8: | |
| | | 9: | MNP |

Die endgerätespezifischen Informationen, also vorzugsweise die IMEIs von Endgeräten, besteht aus drei Teilen:
- Die ersten acht Ziffern der IMEI bilden den sogenannten TAC (TAC: Type Allocation Code). Die ersten zwei Ziffern des TAC bestehen aus einem sogenannten RBI (RBI: Reporting Body Identifier) und weisen auf die zulassende Akkreditierungsstelle hin. Die restlichen sechs Ziffern enthalten den Zulassungscode. Der TAC ist für verschiedene Endgerätehardware eindeutig und kann zur Identifizierung eines Endgerätetyps herangezogen werden.
- Die nächsten sechs Ziffern der IMEI bilden die eigentliche Seriennummer des Endgeräts (SNR: Seriennummer).
- Die letzte Ziffer der IMEI ist die Prüfziffer CD (CD: Check Digit).

Erfindungsgemäß kann die Prüftiefe bei der IMEI vorteilhafterweise auch nach der Anzahl der Stellen die geprüft werden sollen variieren.

Eine weitere vorteilhafte Ausgestaltung der Erfindung sieht vor, dass die maximale Prüftiefe sowohl der IMSI (alle Stellen der IMSI) als auch der IMEI (alle Stellen der IMEI) eine 1:1 Beziehung darstellt.

Eine weitere vorteilhafte Ausgestaltung der Erfindung sieht folgenden ferner seitens der Vermittlungseinrichtung des Mobilfunknetzes ausgeführten Schritt vor:
D) Senden wenigstens einer Steuerungsinformation an das Endgerät, insbesondere einer Steuerungsinformation zur Steuerung der Herstellung einer Verbindung zwischen dem Endgerät und dem Mobilfunknetz.

In einer bevorzugten Ausgestaltung der Erfindung kann mit derartigen Steuerungsinformationen ferner bei Bedarf eine ansonsten seitens eines Endgerätes erfolgende Überprüfung von Verpaarungen von endgeräte- und teilnehmerspezifischen Informationen vorteilhafterweise umgangen oder unterdrückt bzw. überbrückt werden.

Das erfindungsgemäße Verfahren kommt vorteilhafterweise im Rahmen der Herstellung einer Verbindung zwischen dem Endgerät und der Vermittlungseinrichtung des Mobilfunknetzes zum Einsatz und wird vorteilhafterweise immer dann durchgeführt, wenn eine Verbindungsaufnahme zwischen diesen Entitäten stattfindet. Vorteilhafterweise wird das erfindungsgemäße Verfahren durchgeführt bei dem Registrieren eines Teilnehmers, auch als Einbuchungsprozess bezeichnet, wenn also das Endgerät seitens eines Nutzers eingeschaltet wird und eine Verbindung zu dem Mobilfunknetz hergestellt werden soll. Ferner findet das erfindungsgemäße Verfahren vorteilhafterweise Anwendung im Rahmen der Mobilitätskontrolle, also einer Authentifizierung eines Teilnehmers bei einem Verbindungsaufbau, einer Aktualisierung des Aufenthaltsorts des Endgerätes im Mobilfunknetz, sogenannter Location Update, wobei keine aktive Kommunikationsverbindung bestehen muss. Eine derartige Aktualisierung des Aufenthaltsortes wird beispielsweise dann durchgeführt, wenn das Endgerät eines Nutzers sich von einer Funkzelle des Mobilfunknetzes in eine andere Funkzelle begibt. Ebenfalls kann dies bei aktiver Verbindung der Fall sein, beispielsweise wenn mit dem Endgerät von dem Nutzer ein Telefonat geführt wird, wobei der Zellwechsel dann als Handover bezeichnet wird.

In einer vorteilhaften Ausgestaltung erfolgt der Aufbau der Erfindung zwischen dem Endgerät und der Vermittlungseinrichtung in Abhängigkeit der Steuerungsinformationen. Derart kann der Aufbau der Verbindung durch die Steuerungsinformationen, beispielsweise durch darin enthaltene Parameter, beispielsweise an verschiedene Endgeräte von unterschiedlichen Herstellern angepasst werden. Ferner ermöglichen die Steuerungsinformationen beispielsweise die Umgehung einer in einem Endgerät optional vorhandenen internen Überprüfung von zulässigen Verpaarungen von endgerät- und teilnehmerspezifischen Informationen.

Eine weitere vorteilhafte Ausgestaltung der Erfindung sieht folgenden ferner seitens der Vermittlungseinrichtung des Mobilfunknetzes ausgeführten Schritt vor:
E) Senden wenigstens einer Statusinformation an das Endgerät, insbesondere einer Statusinformation betreffend die Nutzbarkeit von Diensten des Mobilfunknetzes oder die Herstellung einer Verbindung zwischen dem Endgerät und dem Mobilfunknetz.

Die Statusinformationen können vorteilhafterweise Informationen bezüglich des Erfolges beziehungsweise des Misserfolges des Herstellens der Verbindung aufweisen und somit eine Information über das Endgerät an den Nutzer des Endgerätes übermitteln.

Zur technischen Lösung der eingangs genannten Aufgabe wird mit der vorliegenden Erfindung ferner ein Verfahren zur Steuerung der Nutzung von einem Endgerät in einem Mobilfunknetz für Kommunikationsverbindungen zur Verfügung stehenden Diensten, wobei das Endgerät für einen Zugang zu dem Mobilfunknetz ein Teilnehmeridentifikationsmodul nutzt, vorgeschlagen, wobei seitens des Endgerätes der folgende Verfahrensschritt ausgeführt wird:
a) Senden von endgeräte- und teilnehmerspezifischen Informationen des Endgerätes an eine Vermittlungseinrichtung des Mobilfunknetzes.

Eine weitere vorteilhafte Ausgestaltung der Erfindung sieht folgenden ferner seitens des Endgerätes ausgeführten Verfahrensschritt vor:
b) Empfangen wenigstens einer Steuerungsinformation von der Vermittlungseinrichtung des Mobilfunknetzes, insbesondere einer Steuerungsinformation zur Steuerung der Herstellung einer Verbindung zwischen dem Endgerät und dem Mobilfunknetz.

Eine weitere vorteilhafte Ausgestaltung der Erfindung sieht folgenden ferner seitens des Endgerätes ausgeführten Verfahrensschritt vor:
c) Empfangen wenigstens einer Statusinformation von der Vermittlungseinrichtung des Mobilfunknetzes, insbesondere einer Statusinformation betreffend die Nutzbarkeit von Diensten des Mobilfunknetzes oder die Herstellung einer Verbindung zwischen dem Endgerät und dem Mobilfunknetz.

Gegenstand der vorliegenden Erfindung ist ferner eine Vermittlungseinrichtung eines Mobilfunknetzes zur Steuerung der Nutzung von einem Endgerät in dem Mobilfunknetz für Kommunikationsverbindungen zur Verfügung stehenden Diensten, wobei das Endgerät für einen Zugang zu dem Mobilfunknetz ein Teilnehmeridentifikationsmodul nutzt, welche gekennzeichnet ist durch
- Mittel zum Empfang von endgeräte- und teilnehmerspezifischen Informationen eines Endgerätes;
- Mittel zum Vergleichen empfangener Informationen des Endgerätes mit seitens einer Datenbank erfassten Informationen, wobei die Informationen in der Datenbank Verpaarungen von endgeräte- und teilnehmerspezifischen Informationen umfassen; und

Mittel zum Sperren von Diensten des Mobilfunknetzes für das Endgerät und/oder das Teilnehmeridentifikationsmodul wenn im Rahmen des Vergleichens festgestellt wird, dass nicht wenigstens ein bestimmter Teil der empfangenen Informationen einem bestimmten Teil einer in der Datenbank erfassten Verpaarung entspricht.

Vorteilhafterweise sind die Mittel zum Vergleichen derart ausgebildet, dass die teilnehmerspezifischen Informationen anhand einer definierten Prüftiefe analysierbar sind, wobei die Prüftiefe vorzugsweise den bestimmten Teil definiert.

Eine weitere vorteilhafte Ausgestaltung der Erfindung ist ferner gekennzeichnet durch Mittel zum Senden wenigstens einer Steuerungsinformation an das Endgerät, insbesondere einer Steuerungsinformation zur Steuerung der Herstellung einer Verbindung zwischen dem Endgerät und dem Mobilfunknetz. Mittels der Steuerungsinformationen können beispielsweise mittels sogenanntem SAT (SAT: SIM Application Toolkit) Informationen an das Endgerät übertragen werden, die eine Vorgehensweise zum Herstellen der Verbindung vorgeben können. Somit kann sichergestellt werden, dass bei Nutzern vorhandene Endgeräte, die bereits eine aus dem Stand der Technik bekannte interne Überprüfung der Verpaarung von endgeräte- und teilnehmerspezifischen Informationen durchführen, diese Überprüfung übergehen und somit kompatibel zu der erfindungsgemäßen Vermittlungseinrichtung eines Mobilfunknetzes sind bzw. betrieben werden können.

Eine weitere vorteilhafte Ausgestaltung der Erfindung ist ferner gekennzeichnet durch Mittel zum Senden wenigstens einer Statusinformation an das Endgerät, insbesondere einer Statusinformation betreffend die Nutzbarkeit von Diensten des Mobilfunknetzes oder die Herstellung einer Verbindung zwischen dem Endgerät und dem Mobilfunknetz. Die Statusinformationen können insbesondere Informationen bezüglich des Erfolges beziehungsweise des Misserfolges des Herstellens der Verbindung aufweisen und somit eine Information über das Endgerät an den Nutzer des Endgerätes übermitteln.

Die erfindungsgemäße Vermittlungseinrichtung ist vorteilhafterweise ausgebildet und/oder eingerichtet ein erfindungsgemäßes Verfahren auszuführen.

Gegenstand der vorliegenden Erfindung ist ferner ein Endgerät zur Nutzung von in einem Mobilfunknetz für Kommunikationsverbindungen zur Verfügung stehenden Diensten, wobei das Endgerät für einen Zugang zu dem Mobilfunknetz ein Teilnehmeridentifikationsmodul nutzt, welches gekennzeichnet ist durch
- Mittel zum Senden von endgeräte- und teilnehmerspezifischen Informationen des Endgerätes an eine Vermittlungseinrichtung des Mobilfunknetzes.

Vorteilhafterweise ist das Endgerät ferner gekennzeichnet durch Mittel zum Empfang wenigstens einer Steuerungsinformation von der Vermittlungseinrichtung des Mobilfunknetzes, insbesondere einer Steuerungsinformation zur Steuerung der Herstellung einer Verbindung zwischen dem Endgerät und dem Mobilfunknetz, wobei die Verbindung vorteilhafterweise in Abhängigkeit der empfangenen Steuerungsinformationen aufbaubar ist. Durch derartige Steuerungsinformationen kann vorteilhafterweise insbesondere eine optional im Endgerät vorhandene Überprüfung von Verpaarungen von endgeräte- und teilnehmerspezifischen Informationen, die intern seitens des Endgerätes durchgeführt wird, umgangen werden.

Eine weitere vorteilhafte Ausgestaltung der Erfindung ist ferner gekennzeichnet durch Mittel zum Empfang wenigstens einer Statusinformation von der Vermittlungseinrichtung des Mobilfunknetzes, insbesondere einer Statusinformation betreffend die Nutzbarkeit von Diensten des Mobilfunknetzes oder die Herstellung einer Verbindung zwischen dem Endgerät und dem Mobilfunknetz. Die Statusinformationen können Informationen für den Nutzer eines Endgerätes über den Erfolg der Herstellung der Verbindung enthalten und/oder in sonstiger Weise informieren.

Weitere Einzelheiten, Merkmale und Vorteile der Erfindung werden nachfolgend anhand der in den Figuren der Zeichnung dargestellten Ausführungsbeispiele näher erläutert. Dabei zeigen:
- Fig. 1: in einer schematischen Darstellung ein Ausführungsbeispiel der an einer erfindungsgemäßen Steuerung der Nutzung von Mobilfunknetzdiensten beteiligten Entitäten, insbesondere umfassend Vermittlungseinrichtung, Endgerät, Datenbank und Basisstation;
- Fig. 2: in einem Blockdiagramm ein Ausführungsbeispiel einer erfindungsgemäßen Steuerung der Nutzung von Mobilfunknetzdiensten seitens einer erfindungsgemäßen Vermittlungseinrichtung des Mobilfunknetzes; und
- Fig. 3: in einem Blockdiagramm ein Ausführungsbeispiel einer erfindungsgemäßen Steuerung der Nutzung von Mobilfunknetzdiensten seitens eines erfindungsgemäßen Endgerätes.

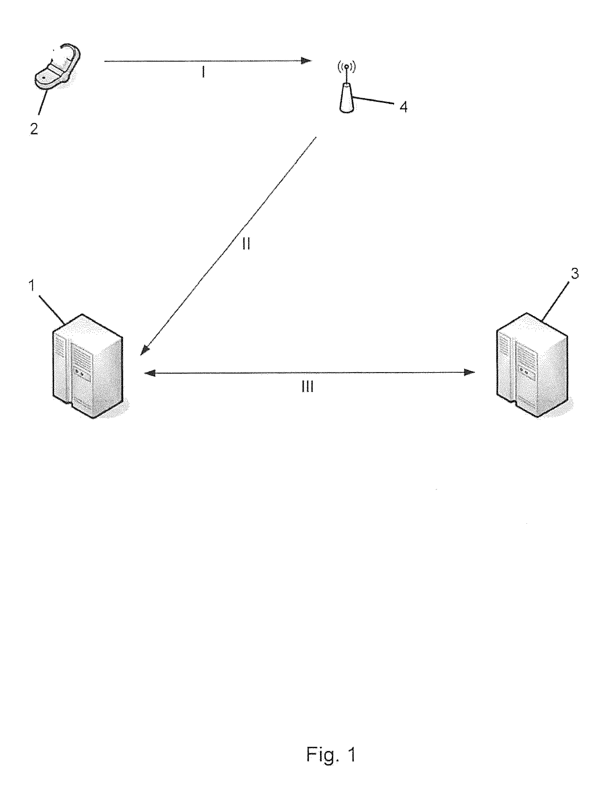

Fig. 1 zeigt ein Ausführungsbeispiel für eine erfindungsgemäße Steuerung der Nutzung von Mobilfunknetzdiensten, vorliegend anhand der einzelnen am Verfahren beteiligten Entitäten. Die Entitäten werden durch ein Endgerät 2, eine Vermittlungseinrichtung 1, eine Datenbank 3 und eine Basisstation 4 dargestellt.

Vorliegend wird das erfindungsgemäße Verfahren und das Zusammenwirken der Entitäten zur Durchführung des erfindungsgemäßen Verfahrens anhand eines Einbuchungsprozesses veranschaulicht. Der Einbuchungsprozess unterscheidet sich demnach von dem aus dem Stand der Technik bekannten und ist entsprechend geändert, so dass das erfindungsgemäße Verfahren Anwendung finden kann.

Das Endgerät 2 startet den Einbuchungsprozess, indem die Initialisierung der Herstellung der Verbindung über die Basisstation 4 erfolgt. Dies verdeutlicht der Pfeil mit dem Bezugszeichen I.

Im Rahmen des Einbuchungsprozesses werden von dem Endgerät 2 endgeräte- und teilnehmerspezifische Informationen vorliegend die IMEI und die IMSI, an die Vermittlungseinrichtung 1, vorliegend ein MSC, des Mobilfunknetzes übermittelt. Dies wird durch den Pfeil mit dem Bezugszeichen II dargestellt.

Die Vermittlungseinrichtung 1 überprüft zunächst, ob die IMEI und die IMSI übermittelt wurden. Sollte dies nicht der Fall sein, so können im Rahmen einer Steuerungsinformation, die von der Vermittlungseinrichtung 1 über die Basisstation 4 zurück an das Endgerät 2 gesendet wird, die fehlenden Informationen angefordert werden.

Sind die IMEI und die IMSI des Endgerätes 2 in der Vermittlungseinrichtung 1 vorhanden, kann diese Verpaarung von IMEI und IMSI überprüft werden. Hierzu wird zunächst von der Vermittlungseinrichtung 1 mit den empfangenen Informationen des Endgerätes 2, also Informationen bezüglich der Verpaarung von IMEI und IMSI oder der Verpaarung selbst, eine Datenbankabfrage durchgeführt. Hierzu wird die Datenbank 3 angefragt, wobei in der Datenbank 3 Verpaarungen von zulässigen IMEI/IMSI-Kombinationen erfasst sind. Ein entsprechendes Ergebnis wird von der Datenbank 3 an die Vermittlungseinrichtung 1 zurück übermittelt. Die Vermittlungseinrichtung 1 kann nun überprüfen, ob es sich bei der Verpaarung, die von dem Endgerät 2 empfangen wurde, um eine gültige Verpaarung handelt. Diese Überprüfung ist durch den Doppelpfeil mit dem Bezugszeichen III dargestellt.

Im Falle einer positiven Überprüfung kann optional eine Statusinformation von der Vermittlungseinrichtung 1 über die Basisstation 4 an das Endgerät 2 gesendet werden und der Einbuchungsprozess mit der Herstellung der Verbindung abgeschlossen werden. Im Fall eines negativen Ergebnisses der Überprüfung beziehungsweise des durchgeführten Vergleiches kann ebenfalls optional eine Statusinformation von der Vermittlungseinrichtung 1 an das Endgerät 2 gesendet werden, wobei die Verbindung nicht hergestellt wird und der Einbuchungsprozess beendet wird.

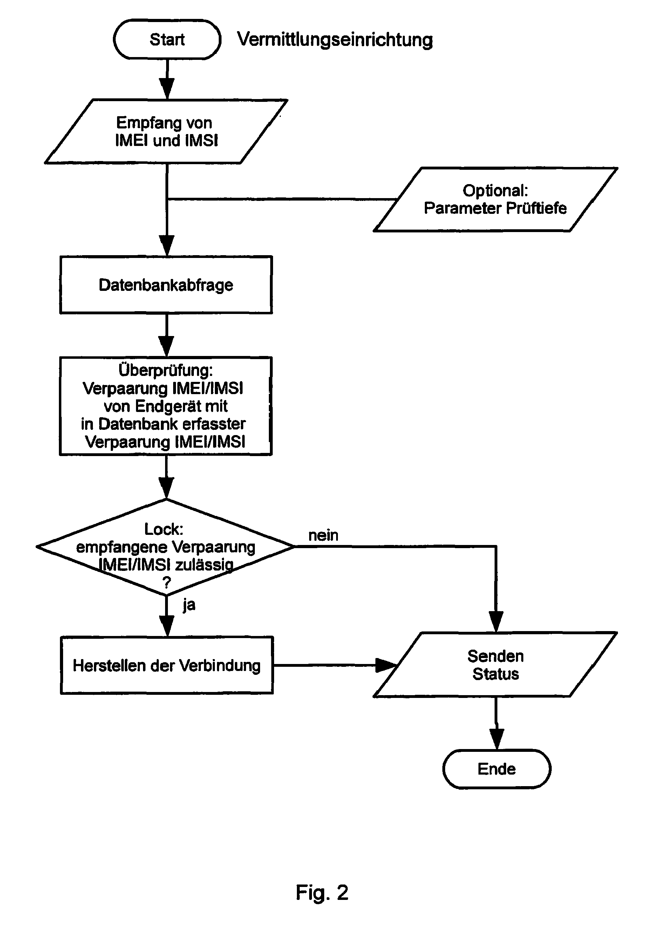

In Fig. 2 ist ein Ablaufdiagramm der einzelnen Verfahrensschritte, die seitens der Vermittlungseinrichtung 1 bei der Durchführung eines Ausführungsbeispiels des erfindungsgemäßen Verfahrens erfolgen, dargestellt.

Zunächst empfängt die Vermittlungseinrichtung 1 eine IMEI und IMSI von einem nicht dargestellten Endgerät 2. Optional kann ein Parameter berücksichtigt werden, der die Prüftiefe der zu analysierenden teilnehmerspezifischen Informationen, vorliegend die IMSI, definiert. Dieser Parameter kann seitens der Vermittlungseinrichtung erfasst sein oder extern über das Mobilfunknetz an die Vermittlungseinrichtung 1 übermittelt werden.

Im nächsten Schritt findet mit den empfangenen Informationen eine Datenbankabfrage statt. Die Datenbank 3 kann Teil der Vermittlungseinrichtung 1 sein oder eine externe in dem Mobilfunknetz vorhandene Datenbank 3 sein, die in Verbindung mit der Vermittlungseinrichtung 1 steht. Vorteilhafterweise kann als Datenbank 3 das sogenannte EIR (EIR: Equipment Identity Register) des Mobilfunknetzes verwendet werden, da dieses einfach an die Voraussetzungen zur Durchführung des erfindungsgemäßen Verfahrens anpassbar ist. Im EIR sind bereits die endgerätespezifischen Informationen erfasst. Demzufolge müsste die Datenbank des EIR lediglich um einen Eintrag bezüglich der teilnehmerspezifischen Informationen, also vorliegend die IMSI der Teilnehmer des Mobilfunknetzbetreibers, erweitert werden. Mit dem Ergebnis der Datenbankabfrage findet in der Vermittlungseinrichtung 1 eine Überprüfung hinsichtlich der Verpaarung der empfangenen IMEI/IMSI-Kombination des Endgerätes 2 mit der in der Datenbank 3 erfassten Verpaarung statt.

Handelt es sich bei der vorliegenden Verpaarung nicht um eine zulässige IMEI/IMSI-Kombination, wird im vorliegenden Ausführungsbeispiel dieses Ergebnis als Statusinformation an das Endgerät 2 gesendet.

Im positiven Fall der Überprüfung wird die Verbindung zwischen der Vermittlungseinrichtung 1 und dem Endgerät 2 hergestellt und ebenfalls das Ergebnis, in diesem Fall ein positives Ergebnis, als Statusinformation an das Endgerät 2 gesendet. Im negativen Fall der Überprüfung wird die Verbindung zwischen der Vermittlungseinrichtung 1 und dem Endgerät 2 nicht hergestellt, das Endgerät und das Teilnehmeridentifikationsmodul für Dienstnutzungen also gesperrt. Das Ergebnis, in diesem Fall ein negatives Ergebnis, kann bei Bedarf als Statusinformation an das Endgerät 2 gesendet werden.

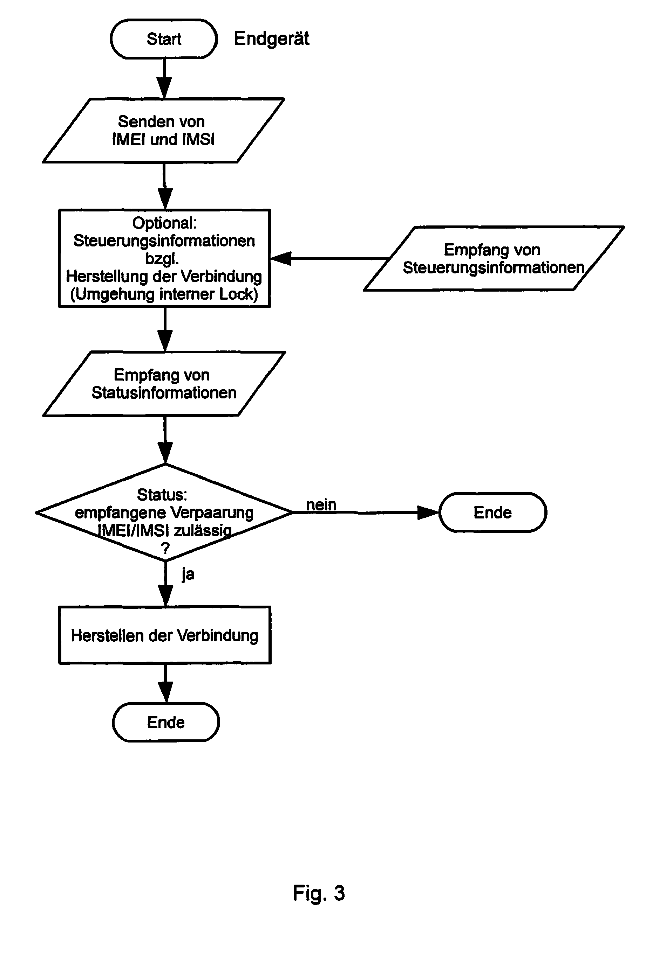

In Fig. 3 ist ein Ablaufdiagramm der einzelnen Verfahrensschritte, die seitens des Endgerätes 2bei der Durchführung eines Ausführungsbeispiels des erfindungsgemäßen Verfahrens erfolgen, dargestellt.

Im Rahmen eines Einbuchungsprozesses werden zunächst von dem Endgerät 2 endgeräte- und teilnehmerspezifische Informationen, vorliegend die IMEI und die IMSI, gesendet. Optional können Steuerungsinformationen empfangen werden, die beispielsweise im Falle von fehlenden Informationen und/oder fehlerhaft übermittelten Informationen von einer Vermittlungseinrichtung 1 des Mobilfunknetzes angefordert werden können. Beispielsweise können diese auch zur Umgehung einer seitens des Endgerätes 2 vorgesehenen internen Überprüfung von zulässigen IMEI/IMSI-Kombinationen, beispielswiese im Rahmen eines SIM-Locks, verwendet werden.

Erfindungsgemäß findet die Überprüfung in der Vermittlungseinrichtung 1 des Mobilfunknetzes statt. Demzufolge empfängt das Endgerät 2 im nächsten Schritt die von der Vermittlungseinrichtung 1 des Mobilfunknetzes übermittelten Statusinformationen bezüglich des Ergebnisses des Einbuchungsprozesses.

In Abhängigkeit dieser Statusinformationen wird die Verbindung hergestellt beziehungsweise der Einbuchungsprozess beendet.

Der Empfang der Statusinformationen ist optional und nicht zwingend erforderlich. Das Herstellen der Verbindung wird seitens der Vermittlungseinrichtung 1 initiiert, so dass im Falle einer negativen Überprüfung von zulässigen IMEI/IMSI-Kombinationen lediglich der Einbuchungsprozess beendet werden kann.

Die in den Figuren der Zeichnungen dargestellten und die in Zusammenhang mit selbigen beschriebenen Ausführungsbeispiele der Erfindung dienen lediglich der Erläuterung der Erfindung und sind für diese nicht beschränkend.

### Bezugszeichenliste:

- 1: Vermittlungseinrichtung (MSC)
- 2: Endgerät (Mobilfunktelefon)
- 3: Datenbank
- 4: Basisstation (BTS)
- I: Einbuchungsprozess
- II: Übertragung Daten
- III: Überprüfung

## Patentansprüche

1. Verfahren zur Steuerung der Nutzung von einem Endgerät (2) in einem Mobilfunknetz für Kommunikationsverbindungen zur Verfügung stehenden Diensten, wobei das Endgerät (2) für einen Zugang zu dem Mobilfunknetz ein Teilnehmeridentifikationsmodul (UIM, SIM) nutzt,
**gekennzeichnet durch** die folgenden seitens einer Vermittlungseinrichtung (1) des Mobilfunknetzes ausgeführten Schritte:
A) Empfangen von endgeräte- und teilnehmerspezifischen Informationen eines Endgerätes (2) von dem Endgerät (2);
B) Vergleichen der empfangenen Informationen des Endgerätes (2) mit seitens einer Datenbank (3) erfassten Informationen, wobei die Informationen in der Datenbank (3) Verpaarungen von endgeräte- und teilnehmerspezifischen Informationen umfassen; und
C) Sperren von Diensten des Mobilfunknetzes für das Endgerät (2) und/oder das Teilnehmeridentifikationsmodul (UIM, SIM) wenn im Rahmen des Vergleichens festgestellt wird, dass nicht wenigstens ein bestimmter Teil der empfangenen Informationen einem bestimmten Teil einer in der Datenbank erfassten Verpaarung entspricht.

2. Verfahren nach Anspruch 1, **dadurch gekennzeichnet, dass** im Rahmen des Vergleichens die teilnehmerspezifischen Informationen anhand einer definierten Prüftiefe analysiert werden, wobei die Prüftiefe vorzugsweise den bestimmten Teil definiert.

3. Verfahren nach Anspruch 1 oder Anspruch 2, **gekennzeichnet durch** folgenden ferner seitens der Vermittlungseinrichtung (1) des Mobilfunknetzes ausgeführten Schritt:
D) Senden wenigstens einer Steuerungsinformation an das Endgerät (2), insbesondere einer Steuerungsinformation zur Steuerung der Herstellung einer Verbindung zwischen dem Endgerät (2) und dem Mobilfunknetz.

4. Verfahren nach einem der Ansprüche 1 bis 3, **gekennzeichnet durch** folgenden ferner seitens der Vermittlungseinrichtung (1) des Mobilfunknetzes ausgeführten Schritt:
E) Senden wenigstens einer Statusinformation an das Endgerät (2), insbesondere einer Statusinformation betreffend die Nutzbarkeit von Diensten des Mobilfunknetzes oder die Herstellung einer Verbindung zwischen dem Endgerät (2) und dem Mobilfunknetz.

5. Verfahren zur Steuerung der Nutzung von einem Endgerät (2) in einem Mobilfunknetz für Kommunikationsverbindungen zur Verfügung stehenden Diensten, wobei das Endgerät (2) für einen Zugang zu dem Mobilfunknetz ein Teilnehmeridentifikationsmodul (UIM, SIM) nutzt,
**gekennzeichnet durch** den folgenden seitens des Endgerätes (2) ausgeführten Schritt:
a) Senden von endgeräte- und teilnehmerspezifischen Informationen des Endgerätes (2) an eine Vermittlungseinrichtung (1) des Mobilfunknetzes.

6. Verfahren nach Anspruch 5, gekennzeichnet den folgenden ferner seitens des Endgerätes (2) ausgeführten Schritt:
b) Empfangen wenigstens einer Steuerungsinformation von der Vermittlungseinrichtung (1) des Mobilfunknetzes, insbesondere einer Steuerungsinformation zur Steuerung der Herstellung einer Verbindung zwischen dem Endgerät (2) und dem Mobilfunknetz.

7. Verfahren nach Anspruch 5 oder Anspruch 6, gekennzeichnet den folgenden ferner seitens des Endgerätes (2) ausgeführten Schritt:
c) Empfangen wenigstens einer Statusinformation von der Vermittlungseinrichtung (1) des Mobilfunknetzes, insbesondere einer Statusinformation betreffend die Nutzbarkeit von Diensten des Mobilfunknetzes oder die Herstellung einer Verbindung zwischen dem Endgerät (2) und dem Mobilfunknetz.

8. Vermittlungseinrichtung (1) eines Mobilfunknetzes zur Steuerung der Nutzung von einem Endgerät (2) in dem Mobilfunknetz für Kommunikationsverbindungen zur Verfügung stehenden Diensten, wobei das Endgerät (2) für einen Zugang zu dem Mobilfunknetz ein Teilnehmeridentifikationsmodul (UIM, SIM) nutzt,
**gekennzeichnet durch**
- Mittel zum Empfang von endgeräte- und teilnehmerspezifischen Informationen eines Endgerätes (2);
- Mittel zum Vergleichen empfangener Informationen des Endgerätes (2) mit seitens einer Datenbank (3) erfassten Informationen, wobei die Informationen in der Datenbank (3) Verpaarungen von endgeräte- und teilnehmerspezifischen Informationen umfassen; und
Mittel zum Sperren von Diensten des Mobilfunknetzes für das Endgerät (2) und/oder das Teilnehmeridentifikationsmodul (UIM, SIM) wenn im Rahmen des Vergleichens festgestellt wird, dass nicht wenigstens ein bestimmter Teil der empfangenen Informationen einem bestimmten Teil einer in der Datenbank erfassten Verpaarung entspricht.

9. Vermittlungseinrichtung (1) nach Anspruch 8, **dadurch gekennzeichnet, dass** die Mittel zum Vergleichen derart ausgebildet sind, dass die teilnehmerspezifischen Informationen anhand einer definierten Prüftiefe analysierbar sind, wobei die Prüftiefe vorzugsweise den bestimmten Teil definiert.

10. Vermittlungseinrichtung (1) nach Anspruch 8 oder Anspruch 9, ferner **gekennzeichnet durch** Mittel zum Senden wenigstens einer Steuerungsinformation an das Endgerät (2), insbesondere einer Steuerungsinformation zur Steuerung der Herstellung einer Verbindung zwischen dem Endgerät (2) und dem Mobilfunknetz.

11. Vermittlungseinrichtung (1) nach einem der Ansprüche 8 bis 10, ferner **gekennzeichnet durch** Mittel zum Senden wenigstens einer Statusinformation an das Endgerät (2), insbesondere einer Statusinformation betreffend die Nutzbarkeit von Diensten des Mobilfunknetzes oder die Herstellung einer Verbindung zwischen dem Endgerät (2) und dem Mobilfunknetz.

12. Vermittlungseinrichtung (1) nach einem der Ansprüche 8 bis 11, **dadurch gekennzeichnet, dass** diese ausgebildet und/oder eingerichtet ist ein Verfahren nach einem der Ansprüche 1 bis 4 auszuführen.

13. Endgerät (2) zur Nutzung von in einem Mobilfunknetz für Kommunikationsverbindungen zur Verfügung stehenden Diensten, wobei das Endgerät (2) für einen Zugang zu dem Mobilfunknetz ein Teilnehmeridentifikationsmodul (UIM, SIM) nutzt,
**gekennzeichnet durch**
- Mittel zum Senden von endgeräte- und teilnehmerspezifischen Informationen des Endgerätes (2) an eine Vermittlungseinrichtung (1) des Mobilfunknetzes.

14. Endgerät (2) nach Anspruch 13, ferner **gekennzeichnet durch** Mittel zum Empfang wenigstens einer Steuerungsinformation von der Vermittlungseinrichtung (1) des Mobilfunknetzes, insbesondere einer Steuerungsinformation zur Steuerung der Herstellung einer Verbindung zwischen dem Endgerät (2) und dem Mobilfunknetz.

15. Endgerät (2) nach Anspruch 13 oder Anspruch 14, ferner **gekennzeichnet durch** Mittel zum Empfang wenigstens einer Statusinformation von der Vermittlungseinrichtung (1) des Mobilfunknetzes, insbesondere einer Statusinformation betreffend die Nutzbarkeit von Diensten des Mobilfunknetzes oder die Herstellung einer Verbindung zwischen dem Endgerät (2) und dem Mobilfunknetz.

16. Endgerät (2) nach einem der Ansprüche 13 bis 15, **dadurch gekennzeichnet, dass** diese ausgebildet und/oder eingerichtet ist ein Verfahren nach einem der Ansprüche 5 bis 7 auszuführen.
